# EUROPÄISCHE PATENTSCHRIFT

(11) **EP 0 821 875 B1**
(45) Veröffentlichungstag und Bekanntmachung des Hinweises auf die Patenterteilung: **13.03.2002**
(21) Anmeldenummer: 97111707.2
(22) Anmeldetag: 10.07.1997
(51) Int. Cl.: A01M 7/00

(54) **Verteilergestänge**
Sprayboom
Barre distributrice

(30) Priorität: 02.08.1996 DE 19631252
(43) Veröffentlichungstag der Anmeldung: 04.02.1998
(73) Patentinhaber: Amazonen-Werke H. Dreyer GmbH & Co. KG, 49205 Hasbergen (DE)
(72) Erfinder: Oberheide, Friedrich, Dipl.-Ing., 49143 Bissendorf (DE)

(56) Entgegenhaltungen:
- FR-A- 2 520 186
- GB-A- 1 218 744

## Beschreibung

Die Erfindung betrifft ein Verteilergestänge gemäß des Oberbegriffes des Patentanspruches 1.

DieGB-A 12 18 744 zeigt ein Gestänge, bei dem der Obergurt in seiner wirksamen Länge dadurch elastisch verkürzbar ist, dass der Obergurt in einer Hülse verschiebbar geführt wird und durch auf jeder Seite der Hülse auf der Stange angeordnete Druckfedern in seiner Arbeitslage gehalten wird. diese Anordnung ist jedoch sehr verschleißanfällig und erfordert zusätzlich Platz, da die Stange über die Länge des Untergurtes in das sich anschließende Element hinaus ragt. Dies ist besonders zum Zwecke des Einklappens nachteilig, weil dann der überstehende Teil der Stange über das Gestängepaket hinaus ragt.

Ein weiteres Verteilergestänge für Feldspritzen ist durch die FR-OS 89 06 875 bekannt. Das Verteilergestänge ist mittels eines Mittelrahmen am Rahmen der Maschine angeordnet. Das sich hieran anschließende Teil wird mittels einer Kette in der Arbeitsposition gehalten. Der gesamte Ausleger kann auf jeder Seite aufgrund des Kettengliedes gegenüber dem Mittelrahmen nach oben ausweichen. Diese ausweichbare Anordnung ist nachteilig, weil die gesamten Ausleger ungedämpft nach oben ausweichen können. Darüber hinaus ist eine spezielle Gelenkausbildung erforderlich, um dieses Ausweichen zu ermöglichen.

Der Erfindung liegt die Aufgabe zugrunde, ohne zusätzlichen Bauaufwand und ohne Gewichtserhöhung eine Ausweichbarkeit des äußersten Segmentes gegenüber dem benachbarten Segment nach oben bei Bodenberührung des äußersten Segmentes zu erreichen.

Diese Aufgabe wird erfindungsgemäß durch die kennzeichnenden Merkmale des Anspruches 1 gelöst. Aufgrund der elastischen Ausweichbarkeit wird sichergestellt, daß das zumindest äußerste Segment des Verteilergestänges gedämpft nach oben ausweichen kann und durch die Elastizität des Obergurtes wieder in seine Ausgangsstellung zurückgedrückt wird. Hierbei ist vorgesehen, daß der Obergurt aus einem blattfederähnlichen Material besteht, so daß die elastische Ausweichbarkeit in den Obergurt integriert ist.

In einfacher Weise kann die Blattfeder aus einem Kunststoffmaterial ausgebildet sein. Dieses ist insbesondere bei einem Einsatz des Verteilergestänges an einer Feldspritze vorteilhaft. Die ausweichbare Baugruppe ist also in einem Segment, vorzugsweise dem äußersten Segment angeordnet. Es ergibt sich durch die erfindungsgemäße Ausgestaltung der enorme Vorteil, daß sich bereits in der Praxis befindliche Verteilergestänge durch einfaches Austauschen des jeweils bisherigen Segmentes gegen das jeweils erfindungsgemäße Segment nachgerüstet werden können. Hierbei ist in einer bevorzugten Ausführung vorgesehen, daß nur das seitlich äußerste Segment elastisch gegenüber den anderen Segmenten, insbesondere bei Boden- oder einer anderen Hindernisberührung nach oben elastisch ausweichen kann.

Weiterhin ist vorgesehen, daß die Blattfeder durch die Ausbildung zumindest einer ihrer Einspannstellen derart angeordnet und/oder ausgebildet ist, daß sie bei Auslenkung des äußersten Segmentes das Bestreben hat nach oben auszuweichen. Somit weicht der Obergurt in vorteilhafter Weise in einen freien Raum ungehindert aus.

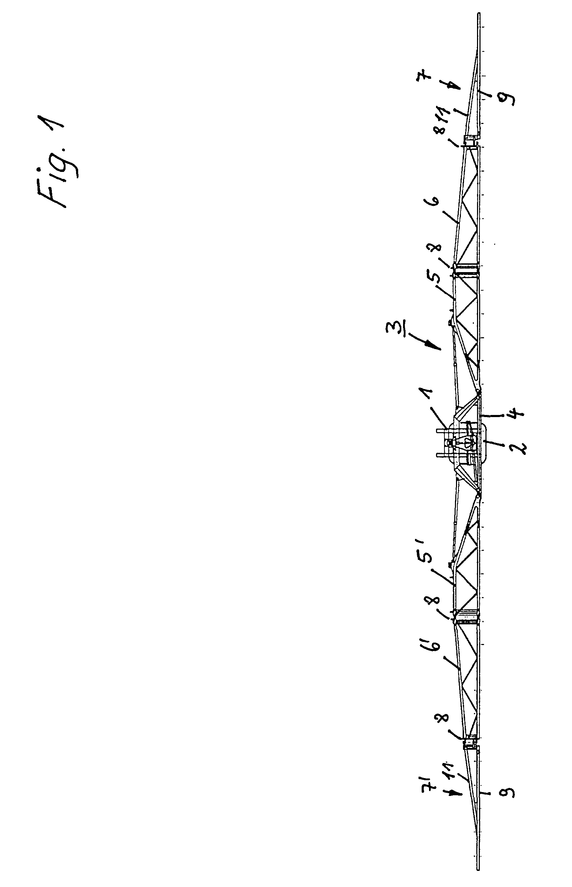

Weitere Einzelheiten der Erfindung sind den übrigen Unteransprüchen, der Beispielsbeschreibung und den Zeichnungen zu entnehmen. Hierbei zeigen
- Fig.1: das an einer Feldspritze angeordnete Verteilergestänge in ausgeklappter Arbeitsstellung in der Ansicht von hinten,

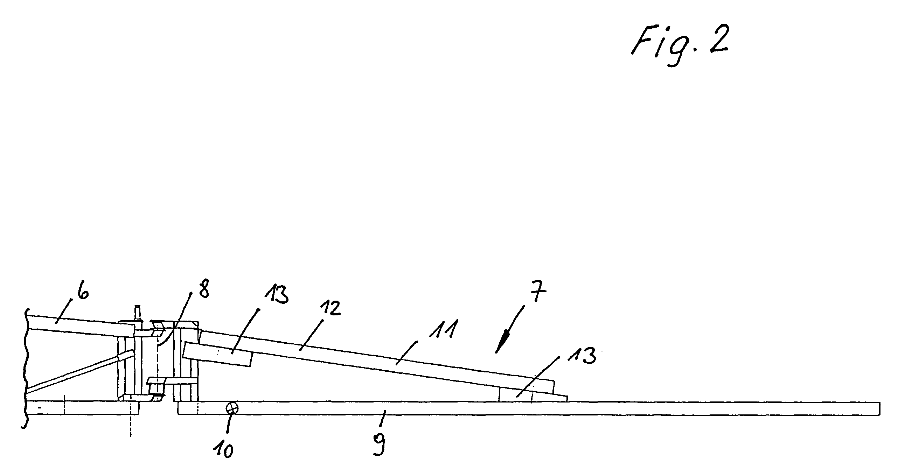

- Fig.2: der äußere Teil des Verteilergestänges in der Ansicht von hinten und in einem größeren Maßstab und
- Fig.3: der äußere Teil des Verteilergestänges gemäß Fig.2, wobei der äußere Teil nach oben ausgelenkt ist.

Die Feldspritze weist den Rahmen 1, den Vorratstank 2 sowie das Verteilergestänge 3 auf. Das Verteilergestänge 3 besteht aus dem Mittelrahmen 4, an dem jeweils seitlich die Segmente 5, 5', 6, 6', 7 und 7' nebeneinander und zueinander um aufrechte Achsen 8 in eine Transportstellung einklappbar angeordnet sind. Die einzelnen Segmente weisen jeweils einen Ober- und Untergurt auf.

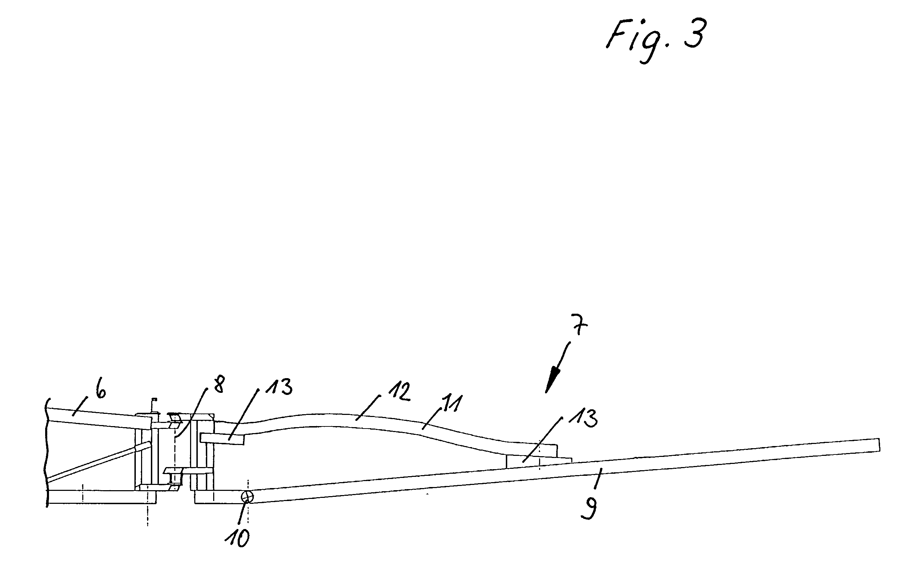

Der Untergurt 9 des jeweils äußeren Auslegersegmentes 7 bzw. 7' ist mittels eines Gelenkes 10 in aufrechter Ebene bewegbar gegenüber dem benachbarten Segment 6 bzw. 6' angeordnet. Der Obergurt 11 des jeweils äußeren Ausleger 7 bzw. 7' ist in seiner wirksamen Länge elastisch verkürzbar ausgebildet. Hierzu ist der Obergurt 11 zumindest teilweise aus einem blattfederähnlichen Material hergestellt. Der Obergurt 11 ist also zumindest teilweise als Blattfeder 12 vorzugsweise aus einem Kunststoffmaterial ausgebildet. Wenn das äußere Segment 7 bzw. 7' Bodenberührung erhält oder auf ein Hindernis aufläuft, kann, wie Fig.3 zeigt, das äußere Segment 7 bzw. 7' des Auslegers nach oben ausweichen. Hierbei schwenkt der Untergurt 9 gegen die Kraft der den Obergurt 11 bildenden Feder 12 nach oben. Die Blattfeder 12 ist durch die Ausbildung der Einspannstellen 13 derart angeordnet, daß sie bei Auslenkung des äußeren Segmentes 7 bzw. 7' das Bestreben hat, nach oben auszuweichen, wie Fig.3 zeigt.

## Patentansprüche

1. Verteilergestänge für eine landwirtschaftliche Verteilmaschine, insbesondere Feldspritze, welches aus mehreren sich quer zur Fahrtrichtung aneinander anschließenden Segmenten zusammengesetzt ist, wobei zumindest das jeweils seitlich äußerste Segment jeweils einen Ober- und einen Untergurt aufweist, wobei der Obergurt (11) in seiner wirksamen Länge elastisch verkürzbar ist, und der Untergurt (9) in aufrechter Ebene bewegbar gegenüber dem benachbarten Segment (5, 5', 6, 7') angeordnet ist, **dadurch gekennzeichnet, daß** der Obergurt (11) aus einem blattfederähnlichen Material besteht, so daß der Untergurt (9) gegen die Kraft der den Obergurt (11) bildenden Blattfeder (12) nach oben ausweichbar angeordnet ist.

2. Verteilergestänge nach Anspruch 1, **dadurch gekennzeichnet, daß** der Obergurt (11) als Blattfeder (12) aus einem Kunststoffmaterial ausgebildet ist.

3. Verteilergestänge nach einem oder mehreren der vorstehenden Ansprüche, **dadurch gekennzeichnet, daß** die Blattfeder (12) durch die Ausbildung zumindest einer ihrer Einspannstellen (13) derart angeordnet und/oder ausgebildet ist, daß sie bei Auslenkung des äußeren Segmentes (7, 7')das Bestreben hat nach oben auszuweichen.

## Claims

1. Spray boom for an agricultural distributor, more especially a field sprayer, said assembly comprising a plurality of segments, which communicate with one another transversely relative to the direction of travel, at least each respective laterally outermost segment having an upper strap and a lower strap, the upper strap (11) being resiliently shortenable in respect of its effective length, and the lower strap (9) being disposed opposite the adjacent segment (5, 5', 6, 7') so as to be displaceable in an upwardly extending plane, **characterised in that** the upper strap (11) is formed from a material similar to a leaf spring, so that the lower strap (9) is disposed so as to be upwardly yieldable in opposition to the force of the leaf spring (12) forming the upper strap (11).

2. Spray boom according to claim 1, **characterised in that** the upper strap (11) is in the form of a leaf spring (12) formed from a plastics material.

3. Spray boom according to one or more of the preceding claims, **characterised in that**, because of the configuration of at least one of its clamping locations (13), the leaf spring (12) is disposed and/or configured in such a manner that it seeks to yield upwardly upon deflection of the outer segment (7, 7').

## Revendications

1. Rampe distributrice pour une machine agricole distributrice, notamment pulvérisateur agricole, composée de plusieurs segments adjacents dans la direction transversale à la direction de déplacement, avec au moins le segment latéral le plus à l'extérieur comportant une ceinture supérieure et une ceinture inférieure,
la ceinture supérieure (11) étant de longueur efficace raccourcissable élastiquement et la ceinture inférieure (9) étant mobile dans un plan relevé par rapport aux segments voisins (5, 5', 6, 7'),
**caractérisée en ce que**
la ceinture supérieure (11) est en une matière analogue à de l'acier à ressort de sorte que la ceinture inférieure (9) peut s'échapper vers le haut contre la force développée par le ressort lame (12) constituant la ceinture supérieure (11).

2. Rampe distributrice selon la revendication 1,
**caractérisée en ce que**
la ceinture supérieure (11) est un ressort-lame en une matière plastique.

3. Rampe selon l'une ou plusieurs des revendications précédentes,
**caractérisé en ce que**
le ressort-lame (12) est monté et/ou réalisé par la réalisation d'au moins l'un de ses points d'ancrage (13) pour que lors du débattement du segment extérieur (7, 7'), il ait tendance à s'échapper vers le haut.
